# EUROPEAN PATENT APPLICATION

(11) **EP 0 722 851 A1**
(43) Date of publication of application: **24.07.1996**
(21) Application number: 96100301.9
(22) Date of filing: 11.01.1996
(51) Int. Cl.: B60C 11/03

(54) **Tires having improved sidesplash capability**

(30) Priority: 13.01.1995 US 372424
(71) Applicant: BRIDGESTONE/FIRESTONE, Inc., Akron, Ohio 44317-0001 (US)
(72) Inventor: Guspodin, James G., Akron, OH 44317 (US); Marble, Roger W., Kent, OH 44240 (US); Ushikubo, Hisao, Fairlawn, OH 44333 (US)
(74) Representative: von Raffay, Vincenz, Dipl.-Ing.

(57) **Abstract**

A pneumatic tire having an improved ability in wet conditions and at high speeds. The tire utilizes a directional design having no continuous circumferential grooves, but rather a combination of continuous grooves (38) and slots (48) oriented at an angle to the equatorial plane of the tire. The grooves (38) channel the water in a forward direction but with a significant sideward component, while the slots (48) channel the water in a sideward direction with only a slight forward component. The tire exhibits improved sidesplash capabilities which minimizes the potential for a build up of a film of water in the footprint area.

## Description

### BACKGROUND OF THE INVENTION

### 1. Field of the Invention

This invention relates generally to radial ply tires designed for use at high speeds on paved road surfaces under wet conditions.

### 2. Description of the Prior Art

In vehicles, proper traction between the tire and the operating surface is necessary for the effective operation of the vehicle. In wet weather conditions, the traction of the tire on a paved surface can be reduced. When precipitation is allowed to build up between the tire and the road surface so as to form a film between the contact area of the tire and the road surface while the vehicle is moving, friction between the tire and the road surface can be seriously reduced and loss of control of the vehicle can result if the friction forces are sufficiently reduced. This condition is referred to as hydroplaning. For this reason, it is desirable to prevent a build-up of film under the contact area of the tire, where the rubber meets the road. This can be accomplished by a tire tread which directs water away from the contact area of the tire, also referred to as the tire footprint, preventing a build-up of precipitation, such as water, in front of the tire, so that film formation can be avoided and the tread can remain in contact with the paved surface.

Various designs have been utilized in tires to accomplish the purpose of preventing water build-up in front of the tire. The most common methods include continuous circumferential grooves in combination with axially oriented grooves to prevent the water build up. While these designs can be effective, one of the problems with these designs is that water from such continuous circumferential grooves is thrown forward in front of the tire. As a vehicle travels faster, more surface area of the paved road contacts the tire resulting in more water being thrown out in front of the tire. When the build up of water in front of the tire becomes greater than the ability of the circumferential grooves to throw water, hydroplaning results. Another problem with these tires is groove wander. Groove wander is a phenomenon which occurs on grooved highways. Grooves are constructed into highways to assist in channelling water and decrease the risk of hydroplaning. When the circumferential grooves of a tire are in alignment with the grooves of a highway, a decrease in steering response of the vehicle may occur. This decrease in response may be barely perceptible, or may be of significant discomfort to the driver. This decrease in steering response is referred to as groove wander.

Some of the other designs utilize a combination of the circumferential groove with grooves directed to the sides of the tires. While this provides some improvement in directing some water away from the road surface in front of the tire, the continuous circumferential grooves still throw a substantial amount of water in front of the tire so that hydroplaning can still occur under the proper conditions. Furthermore, if the grooves directed toward the sides of the tire are not properly designed, water will quickly build up due to turbulence under the tire, thereby exacerbating the problem of water build up.

A current popular method of assuring that the tire throws sufficient water in front of it to prevent water from forming a film between the contact area and the road is to increase the size of the continuous groove or grooves until such grooves are oversized. The principle is basically the same as that set forth above, except that the oversized groove can channel more water in front of the tire than a conventionally sized groove. An example of such an oversized groove can be found in U.S. Patent No. Des. 344,054. While the oversized groove can throw more water in front of the tire than can a conventional groove, the tire containing the oversized groove is subject to the same limitations as the conventional grooves, which is that hydroplaning may result if the water builds up in front of the tire faster than the oversized groove can throw it forward as speeds are increased.

What is needed is an improved method for removing precipitation such as water from under a tire without building up the precipitation in front of the tire while avoiding turbulence under the tire so that the tire tread within the footprint or contact area will remain in contact with the road at higher speeds.

### SUMMARY OF THE INVENTION

In accordance with the present invention, a pneumatic tire having an improved ability in wet conditions to prevent a film of water from building up between the contact area of the tire and a paved road surface resulting in improved traction is disclosed. This novel tire utilizes a directional design which does not utilize continuous circumferential grooves, thereby minimizing the amount of water thrown in front of the tire. Rather, the tire employs a combination of continuous grooves and slots which channel water with a directional component away from the direction of travel of the tire. The grooves direct the water forward but with a substantial sideward component, while the slots channel the water sideward but with only a modest forward component. The movement of the water to the side is sufficient to prevent water from accumulating or building up in front of the tire as it travels forward. Because the tire of the present invention does not employ continuous circumferential grooves, the phenomenon of groove wander is not experienced by a vehicle equipped with tires of the present invention.

The pneumatic tire of the present invention is effective for use at high speeds on paved road surfaces. The tire has an equatorial plane and an outer tread surface extending around an outer circumference of the tire. The tire includes a tread radius and a pair of upper sidewalls on opposite sides of the tire. Each upper sidewall includes an upper sidewall contour radius. A reference arc extends across the outer tread surface portion perpendicular to the equatorial plane of the tire. The reference arc is established at any position on the tire as a loci of points between a pair of end points. Each end point is located by the intersection of the tread radius with the upper sidewall contour radius of each of the upper sidewalls. The reference arc further defines a pair of shoulder arcs which extend 360° around the outer circumference of the tire. A shoulder arc is located at each of the end points of the reference arc. Each shoulder arc is perpendicular to the reference arc, and is parallel to the equatorial plane of the tire.

A 360° design arc extends around the outer circumference of the tire. The design arc divides the outer tread surface portion into a first tread surface portion and a second tread surface portion, each of the tread portions extending 360° around the outer circumference of the tire on either side of the design arc. The design arc, in a symmetrical tire, is located in the equatorial plane of the tire. However, it is not necessary for the design arc to be located in the equatorial plane. In an asymmetrical tire, the design arc can be located parallel to the equatorial plane of the tire between the shoulder arcs of the tire.

The tire also includes a contact area, also referred to as a tire footprint, at which the outer tread surface portion meets the paved road surface. Although the footprint may vary with the camber, which is a parameter which will vary depending on the vehicle and its use, the footprint or contact area as used herein refers to the area of contact of the tire tread with a flat surface under normal loads and design pressures. The contact area has two edges, one in each tread section which extend for 360° around the circumference of the outer tread surface portion. These edges define a pair of contact arcs which are parallel to the equatorial plane of the tire. Each of the contact arcs lie between the shoulder arcs and the 360° design arc.

The tread pattern of the present invention is directional, that is, it must be mounted so that it rotates in a particular direction in order to maximize its design features. One of the striking features of the directionality of the current tire is that it has no continuous circumferential grooves. As discussed above, one of the characteristics of continuous circumferential grooves is that they throw water forward in front of the tire, in effect creating a wave. Because the design of the present invention seeks to avoid or minimize the amount of water thrown in front of the tire, no continuous circumferential grooves are included. The tread design does, however, include a number of short, interrupted grooves aligned along the 360° design arc. However, the remainder of the tire design is such that water is not thrown in front of the tire by these short interrupted groove, but is channeled to the side, as will become evident.

The tire also includes a plurality of continuous grooves. These grooves extend from the region of the tire at or near the design arc on either side of the tire to the region outside the footprint or contact area of the tire. These continuous grooves extend from the design arc in both the first tread surface section and the second tread surface section. Each groove has two sides which define a groove width, and a groove centerline, which is an imaginary line having a first end which intersects the 360° design arc at a first angle α. This imaginary line progresses at this angle α to a second end between the contact arc and the shoulder arc. The groove sides extend from one of the interrupted grooves aligned along the 360° design arc to a point at least between the contact arc and the shoulder arc. Thus, water which accumulates in one of the discontinuous, interrupted circumferential groove can move in a straight line down the continuous grooves and can exit the tread pattern outside the footprint or contact area.

The tread pattern also includes a plurality of slots which extend from the vicinity of the 360° design arc to a region at least beyond the contact arcs in both the first tread surface section and the second tread surface section. Each slot is defined by an imaginary centerline which intersects the 360° design arc at a second angle β and extends in a straight line beyond the shoulder arc, and by two sides which intersect at least the continuous groove nearest to the 360° design arc at a first end and extend beyond at the shoulder arc at a second end. The slots are distinguished from the grooves in that the width of the slots is less than the width of the grooves, and the angle β defining the slot centerline is greater than the angle α defining the groove centerline. An imaginary straight line extending along the sides of the slots in the direction of the 360° design arc will intersect the design arc. However, the slot sides are not extended along these imaginary lines since such an extension would result in unacceptable block size in this region. Thus, although many of the slot sides intersect one of the discontinuous grooves which straddle the 360° design centerline, a small number of slots do not extend to the design centerline. When a block lies along the 360° design arc, the slot that would otherwise intersect the design arc instead ends in the footprint between the design arc and the contact arc. Such a slot does intersect the continuous groove nearest the 360° design arc, so that all of the slots intersect at least the continuous groove nearest the design arc.

The intersection of the continuous grooves and the slots results in formation of a plurality of blocks. One set of blocks is formed along the edge of the outer tread surface. These blocks are intersected by each of the shoulder arcs. Each of the blocks in this set form a first set of blocks and have a minimum area of 0.4 square inch. A second set of blocks lies at least partially within the contact area and constitute the remaining blocks in the tread. The blocks in this set are not intersected by the shoulder arcs, and have a minimum area of at least one square inch.

The configuration of this novel tread design prevents water from accumulating under the tread, and rather than pushing water out forward in front of the tire, forces water outward either along the continuous grooves or along the slots where it exits the contact area or footprint with a substantial sideward component so that water does not build up in front of the tread.

Other features and advantages of the present invention will become apparent from the following more detailed description of the preferred embodiment, taken in conjunction with the accompanying drawings, which will illustrate, by way of example, the principles of the invention.

### BRIEF DESCRIPTION OF THE DRAWINGS

The file of this patent contains at least one color photograph. Copies of this patent with color photographs will be provided by the Patent and Trademark Office upon request and payment of the necessary fee.
Figure 1 is a right side perspective view of a front tire of the present invention, it being understood that the tread pattern is repeated throughout the circumference of the tire, the opposite side being substantially as that shown;
Figure 2 is a front elevational view of the front tire of the present invention;
Figure 3 is a right side elevational view of the right side of the front tire of the present invention, the opposite side being a mirror image thereof;
Figure 4 is an enlarged fragmentary front elevational view of the front tire of the present invention;
Figure 5 is a right side perspective view of a rear tire of the present invention, it being understood that the tread pattern is repeated throughout the circumference of the tire, the opposite side being substantially as that shown;
Figure 6 is a front elevational view of the rear tire of the present invention;
Figure 7 is a right side elevational view of the right side of the rear tire of the present invention, the opposite side being a mirror image thereof;
Figure 8 is an enlarged fragmentary front elevational view of the rear tire of the present invention;
Figure 9 is a black and white photograph of a prior art tire undergoing the hydroplaning trough test.
Figure 10 is a black and white photograph of a prior art tire undergoing the hydroplaning trough test.
Figure 11 is a black and white photograph of a prior art tire undergoing the hydroplaning trough test.
Figure 12 is a black and white photograph of a prior art tire undergoing the hydroplaning trough test.
Figure 13 is a black and white photograph of a tire of the present invention undergoing the hydroplaning trough test.
Figure 14 is a cross-section of a portion of a tire showing the tire contour definition.
Figure 15 is a color photograph of a prior art tire undergoing the hydroplaning trough test.
Figure 16 is a color photograph of a prior art tire undergoing the hydroplaning trough test.
Figure 17 is a color photograph of a prior art tire undergoing the hydroplaning trough test.
Figure 18 is a color photograph of a prior art tire undergoing the hydroplaning trough test.
Figure 19 is a color photograph of a tire of the present invention undergoing the hydroplaning trough test.

### DESCRIPTION OF THE PREFERRED EMBODIMENTS

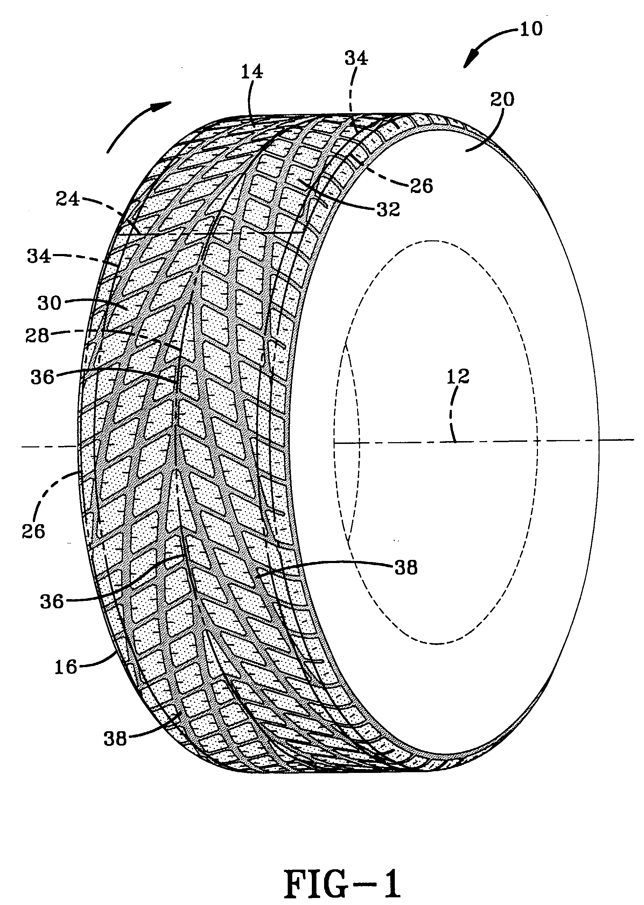

Referring to Figure 1, there is illustrated a pneumatic radial ply tire of the present invention. The invention is best understood in the context of the following definitions and terms as used herein.

"Equatorial plane" is the plane perpendicular to the tire axis and passing through the center of its tread.

"Tread radius" is that radius which describes the curvature of the tread between the shoulder radii. A tire may have more than one tread radius.

"Shoulder radius", sometimes referred to as the corner radius, is the fillet radius between the tread radius and the upper sidewall contour.

"Upper sidewall contour radius" is that radius which defines the curvature of the sidewall between the maximum width point on the sidewall and the shoulder radius.

"Outer tread surface portion" is the molded rubber component bonded to the tire carcass which lies between the tire sidewalls including the portion of the tire that contacts a paved road surface when the tire is inflated to recommended pressures and loaded in accordance with recommended loads.

"Reference arc" is a loci of points on the outer tread surface portion perpendicular to the equatorial plane forming an arc between two end points, each of the end points positioned at the intersection of the tread radius and the upper sidewall contour radius.

"Contact area", interchangeably referred to as "footprint", is the portion of the outer tread surface that interfaces with the road when the tire is inflated to recommended pressures under a load applied in or parallel to the equatorial plane normal to the rolling direction.

"360° design arc" is a loci of points forming an arc extending around the outer circumference of the tire defined by the intersection of a plane parallel to the equatorial plane of the tire and the outer tread surface portion of the tire.

"Sidesplash" is the ability of a tire to move water to the side of the tire at an angle away from the contact area rather to move the water to the region in front of the contact area.

"Continuous circumferential groove" is a void area in the outer tread surface portion which extends in a continuous manner about the tire circumference. It may be straight, curved or zigzag and may be parallel to the equatorial plane or at an angle to the equatorial plane.

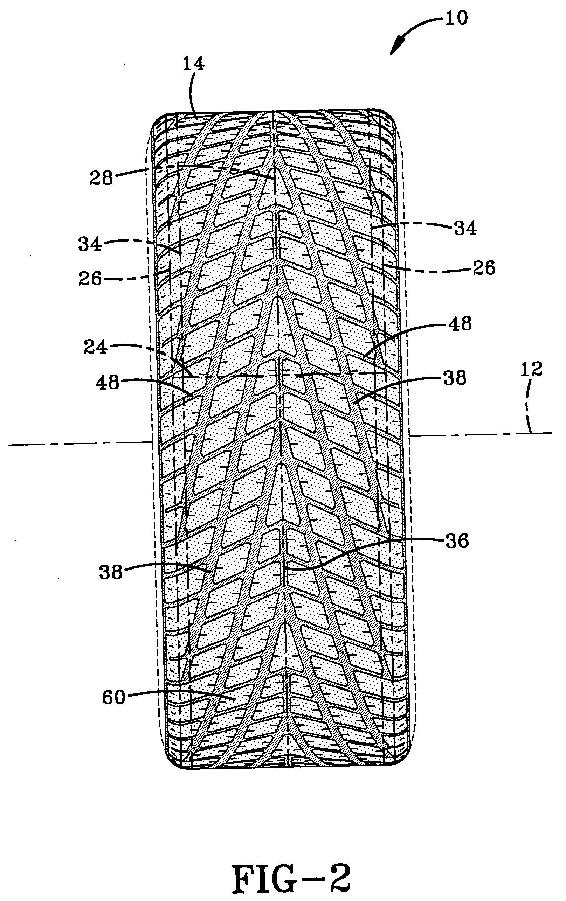

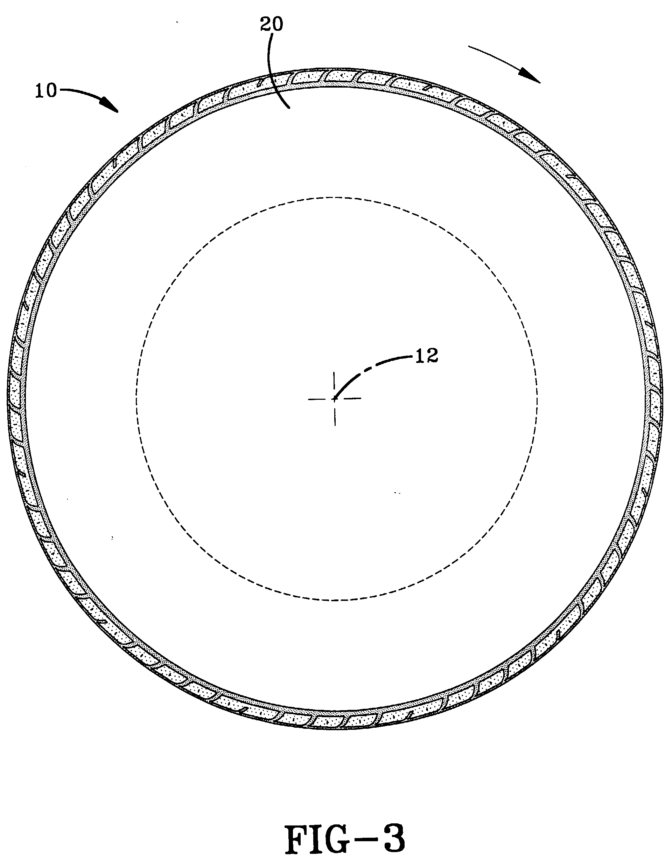

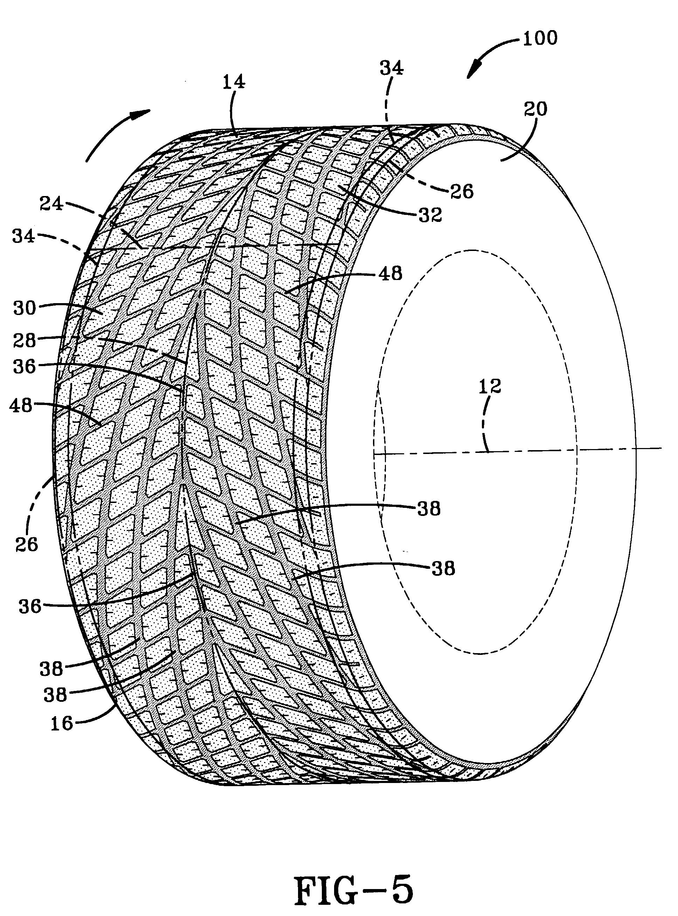

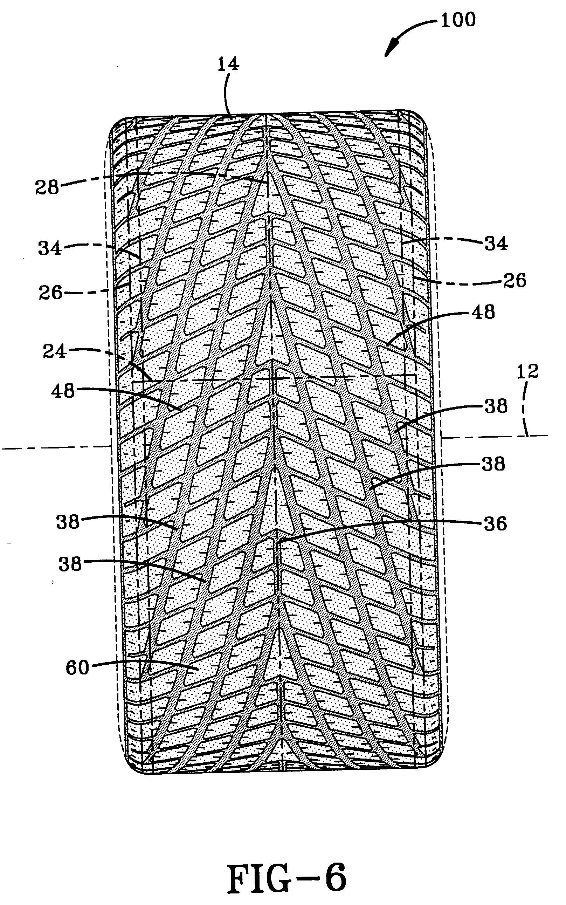

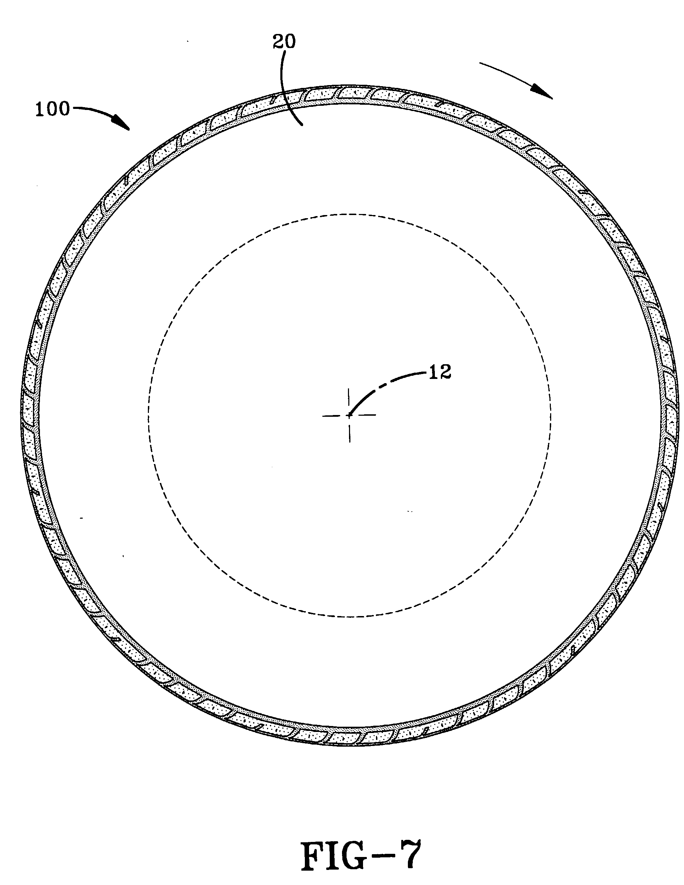

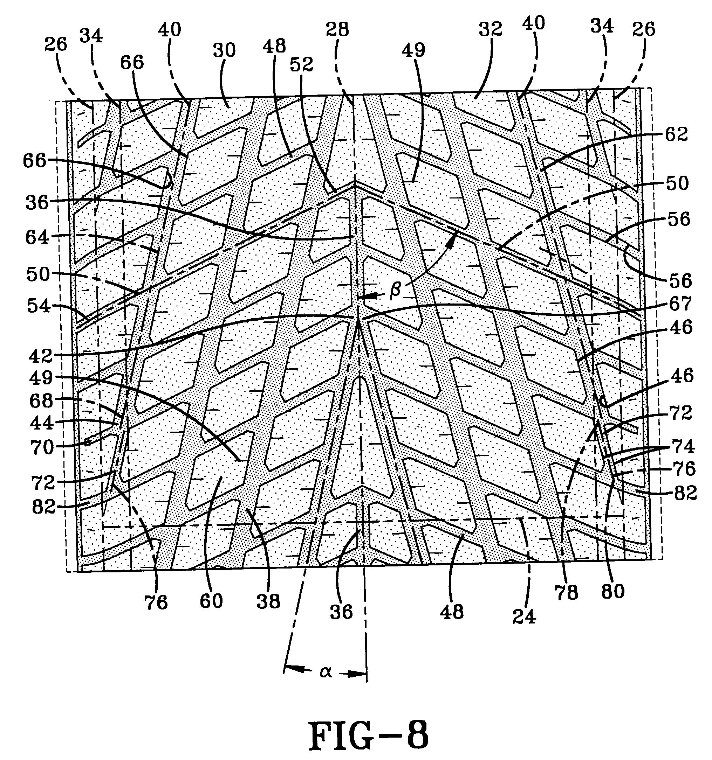

Referring to Figures 1-8, a pneumatic radial ply tire for use on a paved road surface at high speeds is set forth. When used in a tire/vehicle system, tire 10 of Figure 1 and tire 100 of Figure 5 are utilized as the front and rear tires respectively, with tire 100 being up to 35% wider than tire 10. Because of the differences in size, minor differences in geometry between tires 10 and tires 100 result, as will be evident. However, common features between front and rear tires will be identified with the same numerals. Unless otherwise indicated, the description of tire 10 (front) and tire 100 (rear) are the same.

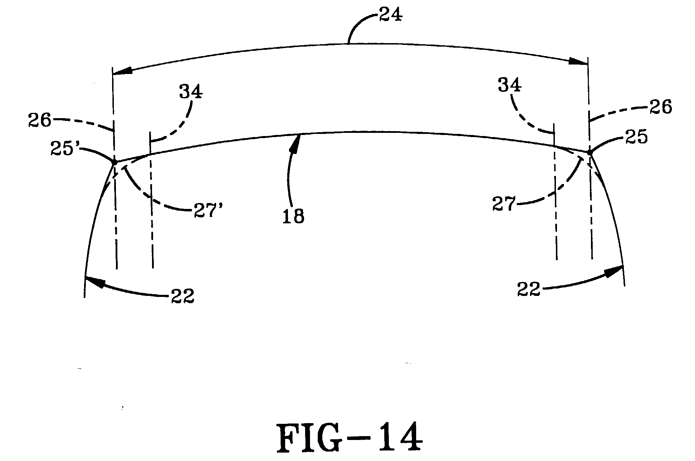

Tire 10 has an equatorial plane which is perpendicular to the tire axis 12 and passing through the center of its tread. Tire 10 has an outer tread surface portion 14 which extends around an outer circumference 16 of the tire. Tire 10 further includes a tread radius 18, and a pair of upper sidewalls 20 on opposite sides of the tire, each upper sidewall 20 having an upper sidewall contour radius 22. Reference arc 24 extends across the outer tread surface portion 14 perpendicular to the equatorial plane of the tire. Referring now to Figure 14, reference arc 24 is established as a loci of points between a pair of end points, 25, 25'. Each end point 25, 25' is located at a point in space established by the intersection of tread radius 18 with upper sidewall contour radius 22. End points 25, 25' may be located on the tire. However, if the tire has a shoulder radius, for example as depicted by broken lines 27, 27' in Figure 14, which is smaller than either the upper sidewall contour radius or the tread radius, then end points 25, 25' are located as points in space. When a tire has a plurality of tread radii along the reference arc, the relevant tread radius 18 is the radius proximate to upper sidewall 20. End points 25, 25' establish reference arc 24 and reference arc 24 in turn defines a pair of shoulder arcs 26, which extend 360° around the outer circumference 16 of tire 10 at end points 25, 25'.

Tire 10 includes a 360° design arc 28 which extends around the outer circumference 16 between shoulder arcs 26, dividing the outer tread surface portion 14 into a first tire surface section 30 and a second tire surface section 32. As shown in Figure 1, the 360° design arc 28 lies within the equatorial plane of the tire, so that the first tire surface section 30 and the second tire surface section 32 have equal areas, resulting in a symmetrical tire. However, when the 360° design arc 28 is not within the equatorial plane of the tire, but rather lies in some other plane which is parallel to the equatorial plane of the tire, then the first tire surface section 30 and the second tire surface section 32 are not equal and the tire is asymmetrical.

Tire 10 has a contact area at which the outer tread surface portion 14 meets a paved road surface. The contact area has two edges, one in each tread surface section 30, 32 which circumscribe a pair of arcs on the outer tread surface portion 14, referred to as contact arcs 34 as the tire rotates over the road surface. These contact arcs 34 are roughly parallel to the equatorial plane of the tire, and lie between shoulder arcs 26 and design arc 28. It will be understood that under various conditions of loading and in various vehicle designs, the camber angle, which is a measure of the tendency of the wheel to vary from a direction perpendicular to the road surface as determined by the angle between a line extending normal to the road surface and the plane of the wheel, will result in a contact area or footprint which is different from the footprint as defined herein under normal, that is perpendicular loadings, in which the wheel is perpendicular to the surface and hence result in different contact arcs.

Tire 10 has a directional pattern as shown in Figures 1 and 5. The tire will perform most effectively when mounted on a wheel so that the tread rotates in the direction shown by the arrows in the Figures. While the directional pattern does not include any circumferential grooves, the pattern does include a plurality of short, interrupted grooves 36 aligned along design arc 28. As shown in Figures 1 and 5, design arc 28 lies within the equatorial plane so that interrupted grooves 36 are in the geometric center of the outer tread surface portion 14.

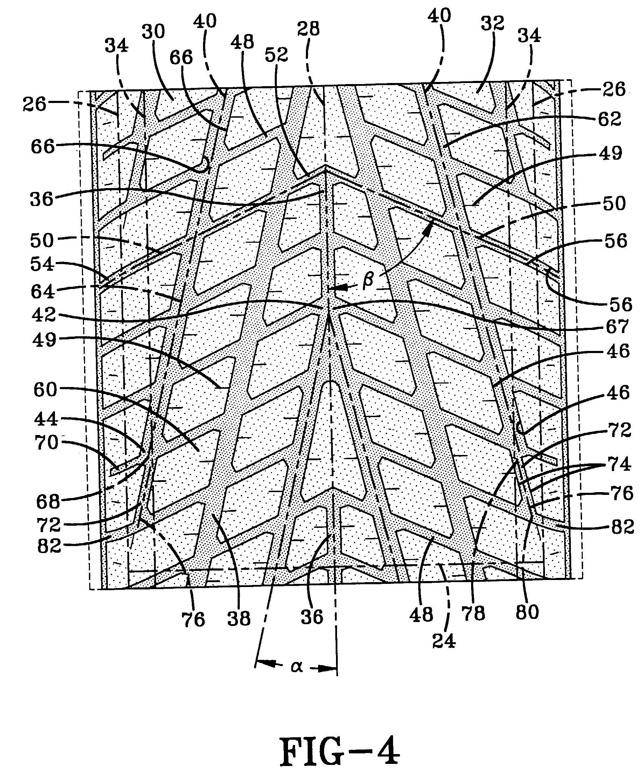

A plurality of continuous grooves 38 extends from the discontinuous, interrupted grooves 36 located along design arc 28 into tire surface sections 30, 32. Referring now to Figure 4, each groove has a centerline 40 having a first end 42 and a second end 44 between contact arc 34 and shoulder arc 26, groove centerline 40 intersecting design arc 28 at a first angle α. An arc in the equatorial plane is defined as having an angle of 0°,so that the design arc, which lies in the equatorial plane, also has an angle of 0°. An arc lying in a plane parallel to the equatorial plane also has an angle equal to 0°. The reference arc, perpendicular to the equatorial plane, has an angle of 90°. Each groove 38 has a pair of sides 46 extending roughly parallel to the groove centerline, defining a groove width, which extend from one of interrupted grooves 36 to at least between contact arc 34 and shoulder arc 26.

A plurality of continuous slots 48 extends outward toward upper sidewalls 20 in tire surface sections 30, 32. Referring again to Figure 4, each slot 48 has a centerline 50 having a first end 52 and a second end 54 extending in a line beyond shoulder arc 26, slot centerline 50 being an imaginary line intersecting design arc 28 at a second angle β, which is greater than the first angle α which defines the groove angle. Each slot 48 has a pair of sides 56 extending roughly parallel to the slot centerline, defining a slot width narrower than the groove width, which extend from at least one of the continuous grooves 38 nearest design arc 28 to beyond shoulder arc 26. Although many of the slot sides intersect interrupted grooves 36 along design arc 28, certain slots cannot intersect the interrupted grooves 36 at design arc 28 since tread block size becomes unacceptably small. For the purposes of the present invention, continuous grooves 38 are distinguished from slots 48 in that slots 48 have a narrower width than grooves 38 and lie at a greater angle from the design arc 28 than grooves 38.

A plurality of tread blocks 60 are formed by the intersection of grooves 36, 38 and slots 48. The continuous grooves and slots have sides which are smooth, since discontinuities in the form of abrupt pattern changes and directional changes causes undesirable turbulence. Blocks intersected by each of shoulder arcs 26 form a first set of blocks. The blocks in this first set have a minimum area of 0.4 square inch. The remaining blocks which form a second set of blocks which are not intersected by the shoulder arcs, lie at least partially within the contact area and have a minimum area of one square inch. While the block size is dictated by the number of, and angles of, grooves 38 and slots 48, it is necessary for the blocks to meet the minimum area requirements in order to avoid premature tire wear and to maintain tire stability. When the blocks fall below the required minimum areas, wear is accelerated and stability rapidly decreases. In a preferred embodiment, blocks include minor notches 49 which are sometimes erroneously referred to as sipes. Sipes most correctly are the metal blades built into tire molds which form minor notches 49. In a more preferred embodiment, the second set of blocks include minor notches 49 which have an opening into adjacent groove 38.

As can be seen from the design pattern of the tire of the present invention as set forth in Figures 1-8, features of the tire include straight, continuous grooves and slots which channel water effectively from the contact area out to the side area. Because of the absence of continuous circumferential grooves, the tires of the present invention exhibit improved sidesplash, as the water is directed to the sides of the tires rather than forcing water outward to the region in front of the footprint.

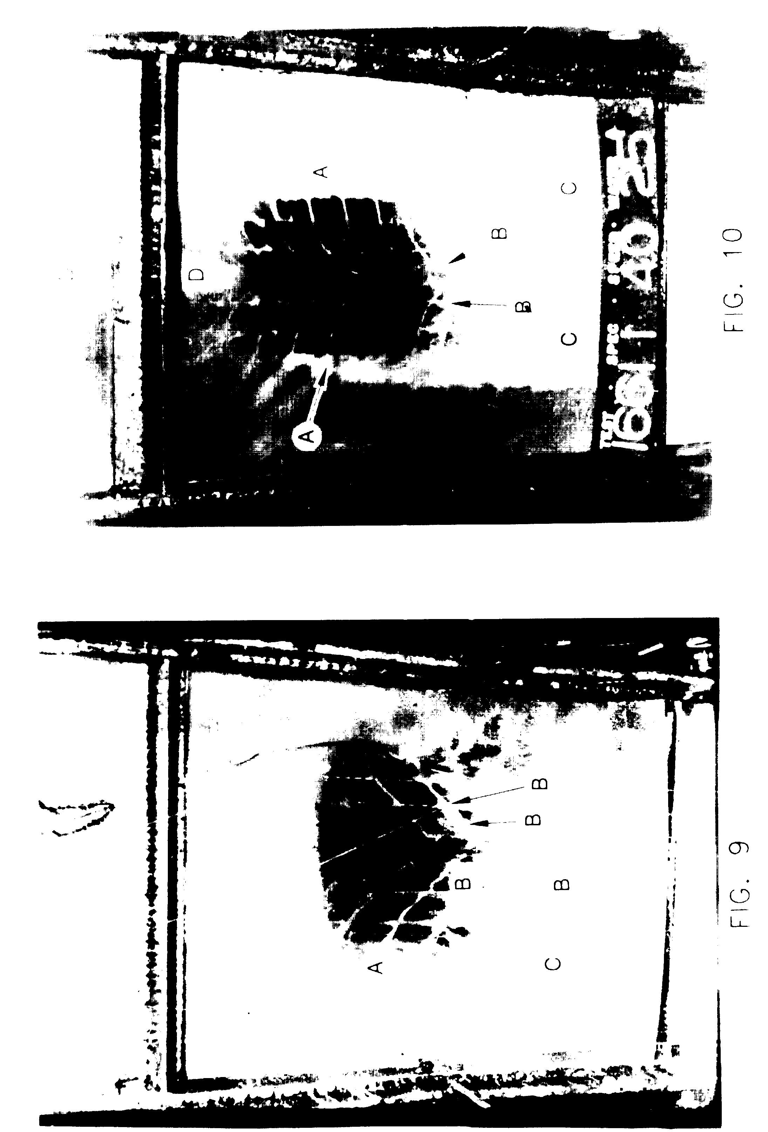

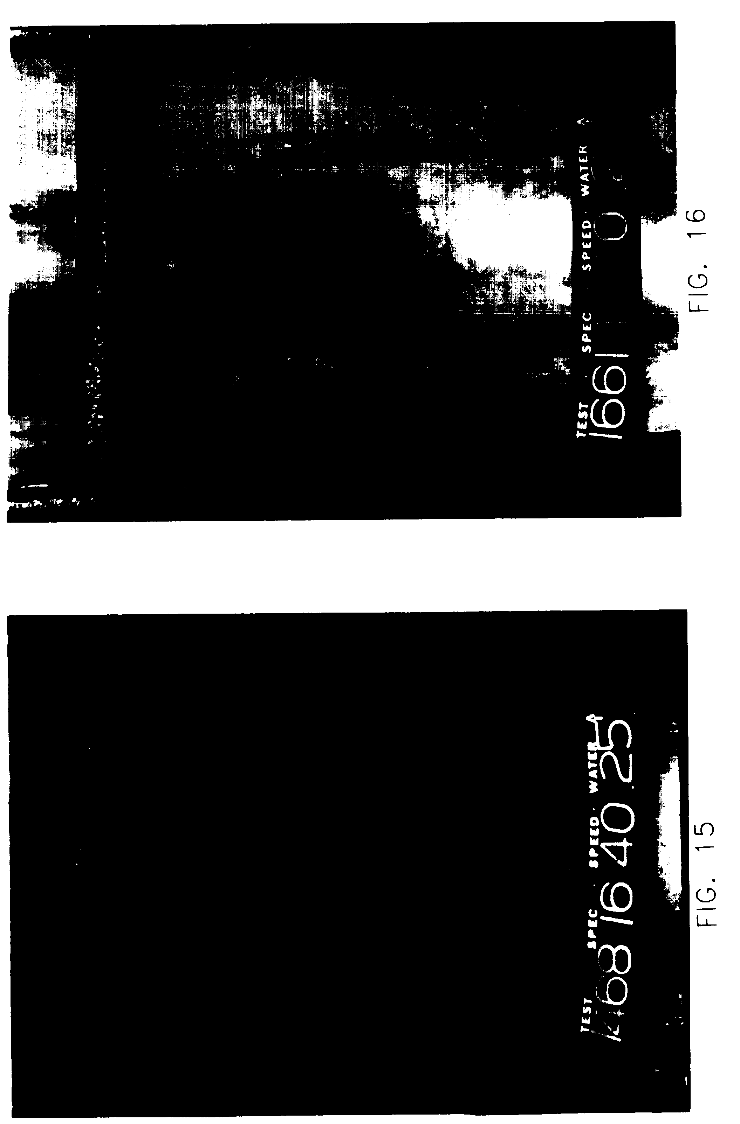

Tests were run on the tire of the present invention and prior art designs. The hydroplaning trough test was conducted on each tire. This test is conducted by driving or towing a vehicle having the test tire mounted on it over a trough. The trough contains water at a preselected depth, and includes a glass plate installed on the traction surface of the trough. Mounted under the plate was a high speed camera. The pressurized tire of interest is driven through the trough into contact with the glass. The preselected speed of the vehicle as it is driven or towed through the trough can be varied to correspond to desired conditions, and the contact area or footprint of the tire is readily observed through the glass. As the vehicle traverses the glass, high speed photographs of the tire are taken as it passes over the glass. In order to more easily observe the ability of the tire to avoid a build-up of water under the tire, which leads to hydroplaning, colored water is introduced into the trough over the glass. The water is colored, in this case green-yellow similar to the color of antifreeze, so that the behavior of the tire in contact with a wet surface is readily observed in color photographs. Figures 9-13 are black and white photographs of actual test results of prior art tires and the tire of the present invention. Figures 15-19 are color photographs of the same test results. In the black and white photographs, Figures 9-13, A represents sidesplash, and is a white region at the side of the tire. In the color photographs, Figures 15-19, these regions are more clearly visible as bright flumes where water is being expelled from the side of the tire. In the black and white photographs, Figures 9-13, B represents pockets of turbulence which are generally shown as localized areas within the tread in grooves and slots, particularly at discontinuities, and both immediately in front of and behind the tread. It is difficult to distinguish turbulence in the black and white photographs as all regions where water is concentrated are white. In the color photographs, Figures 15-19, turbulence is more readily determined, as it appears as white pockets in the tread and as white pockets surrounded by greenish yellow water in other areas. In the black and white photographs, Figures 9-13, blue sky is depicted by the letter C. While the blue sky is readily apparent in the color photographs as regions where no water is present, it is difficult to distinguish in the black and white photographs. The blue areas are views of the sky, which, since the area is devoid of water, is what is seen by the camera as it points upward from below the glass plate. In the black and white photographs, the regions labeled as D are flumes of water which are being ejected in front of the tire. In the color photographs, these flumes are clearly visible and may have a bit of a tint of green yellow. Water build-up immediately in front of the tire and turbulence in the footprint area are undesirable, as both can lead to reduction of contact, and in the worst scenario, loss of contact, between the tire and the road.

Referring now to Figures 9 and 15, which is a photograph in black and white and color respectively, showing a prior art tire having circumferential grooves and side or lateral grooves undergoing the hydroplaning trough test at a speed of 40 mph with 0.25 inches of water in the trough. The direction of tire rotation is shown by the arrow on the photograph. Unless otherwise noted, these conditions were duplicated for all tires tested. As can be seen in the photograph, the footprint of the tire remains in contact with the plate. It is also apparent that a large amount of water, as shown by the white wave in Figure 9 and the yellowish wave or pattern in Figure 15, is thrown out in front of the tire by the continuous circumferential grooves. While flumes may be distinguished in both Figures 9 and 15, these flumes are not distinct and are characterized as weak. This prior art tire also exhibits some sidesplash, as water is thrown from the side or lateral grooves. In some of the side or lateral grooves, there are some areas which are white in Figure 9, and brighter in color appearing as white in Figure 15. This is indicative of a small amount of turbulence. Immediately behind the footprint in contact with the glass is a region of turbulence which is common to all of the tires tested. Immediately adjacent to the region of turbulence and adjacent to the side of the tire is a region of blue sky, depicted by area C in Figure 9 and readily observed in Figure 15. The color blue is readily apparent in Figure 15 since all of the colored water has been moved out of this region.

Figure 10 and Figure 16, which is a photograph in black and white and color respectively, show a prior art tire having a design similar to the tire as set forth in U.S. Patent No. Des. 344,054, previously discussed undergoing the hydroplaning trough test. As can be seen, a flume of water is ejected in front of the tire by the large, oversized groove. The contact area does not display a build-up of water, but, because of the width and concavity of the center groove, the amount of tread in the contact area actually contacting the mating glass is drastically reduced as compared to other designs because of the groove design. It is also apparent that sidesplash on the right side of the photograph is good, but sidesplash is diminished on the left side of the photograph. There is turbulence immediately behind the contact area, and a lack of water is evidenced in Figure 10 in area C and in Figure 16 by the blue immediately adjacent the sidewall next to the region of turbulence.

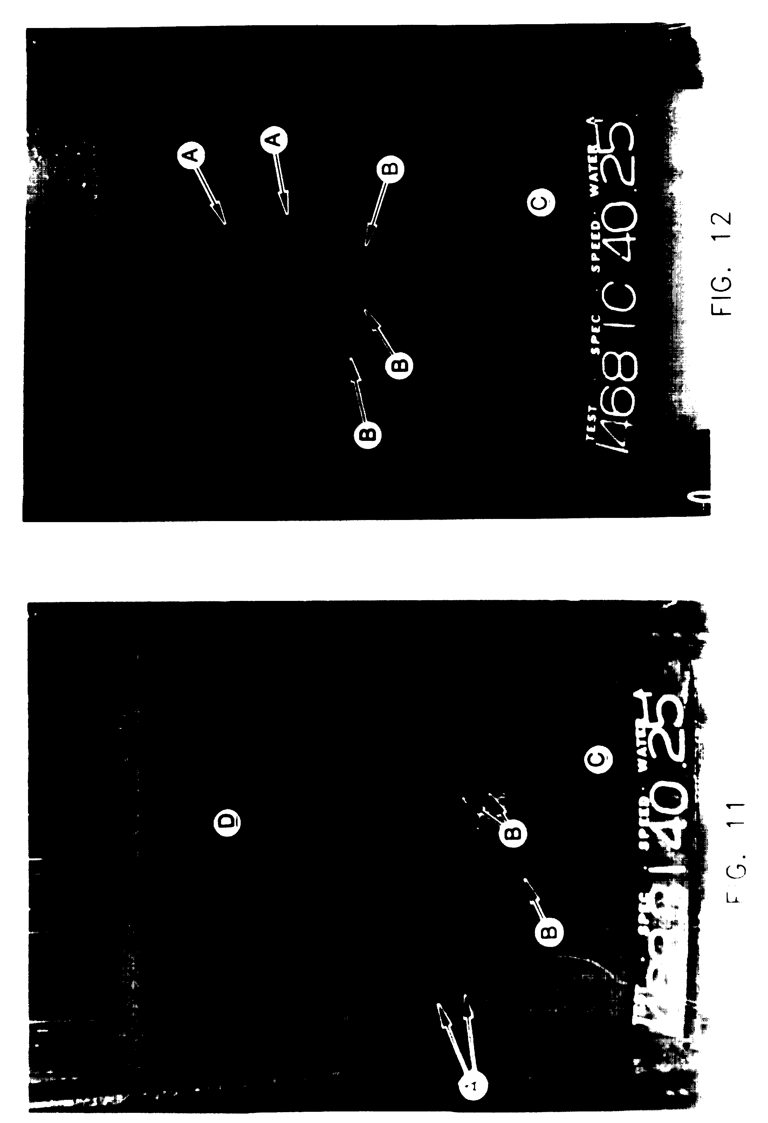

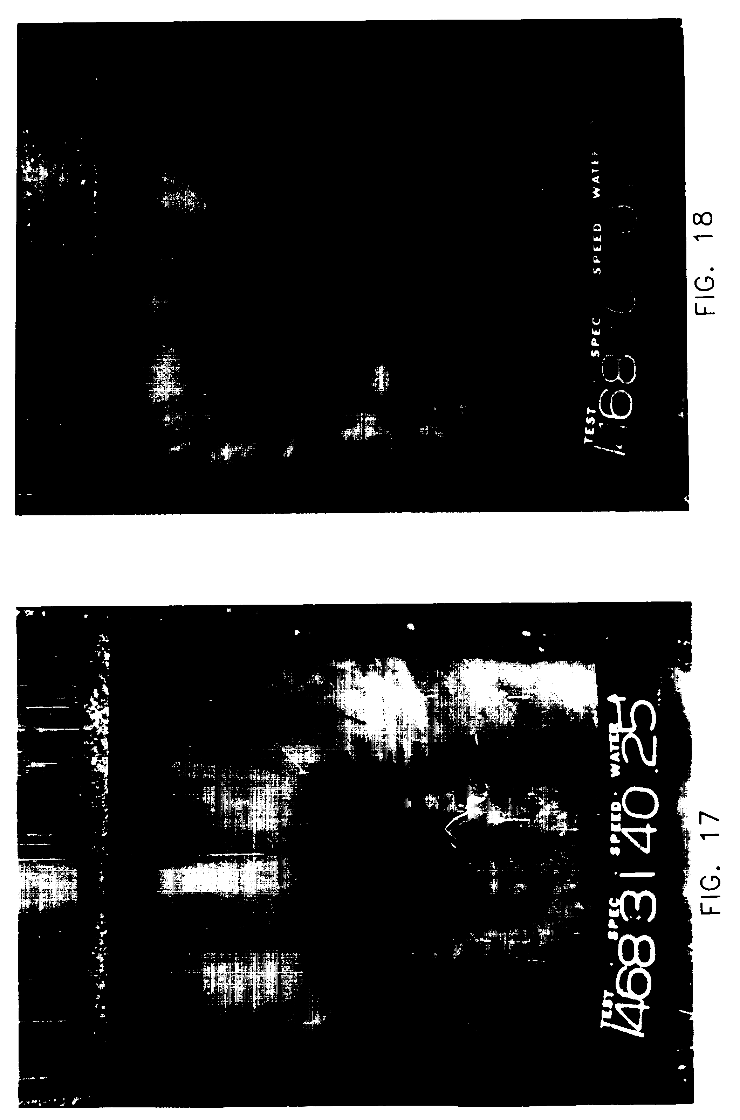

Figure 11 and Figure 17, which is a photograph in black and white and color respectively, show another prior art tread design having a series of continuous circumferential grooves and a series of side or lateral grooves oriented approximately perpendicular to he circumferential grooves undergoing the hydroplaning trough test. Both figures discloses a large flume of water discharged in front of the central circumferential groove and two secondary flumes discharging water primarily in front of the tire on either side of the central groove. This tire design also exhibits some sidesplash on one side of the tire, as evidenced by area A in Figure 11 and by the bright yellowish area on either side of Figure 17, the sidesplash on the right side of the tire in Figure 17 being more pronounced. There is also turbulence behind the footprint, the turbulence being well-defined at the circumferential grooves and the lateral or side grooves.

Figures 12 and 18, which are the same photographs in black and white and color respectively, show a prior art tread design undergoing the hydroplaning trough test. This prior art tread design has no continuous circumferential grooves, but has a series of oblique grooves intersecting a series of grooves perpendicular to the equatorial plane of the tire. This tire is of interest because it shows some sidesplash from the oblique grooves, as shown in the upper right corner, as is expected. However, this tire surprisingly shows the discharge of a wall of water immediately in front of the contact area. There is some turbulence in the oblique grooves as evidenced by the somewhat brighter areas in both the black and white and color photographs. This is depicted as area B in Figure 12. There is also some undesirable film build-up at the left side of the tire in the contact area. There is turbulence to the rear of the tire, although the amount of turbulence behind the footprint is less than in the other tires. Also, it will be observed that accompanying the reduced turbulence to the rear is a significant decrease in water as evidenced by the large patch of blue in Figure 18 and indicated by area C in Figure 12. However, there is an increase in turbulence on the left side of the photograph.

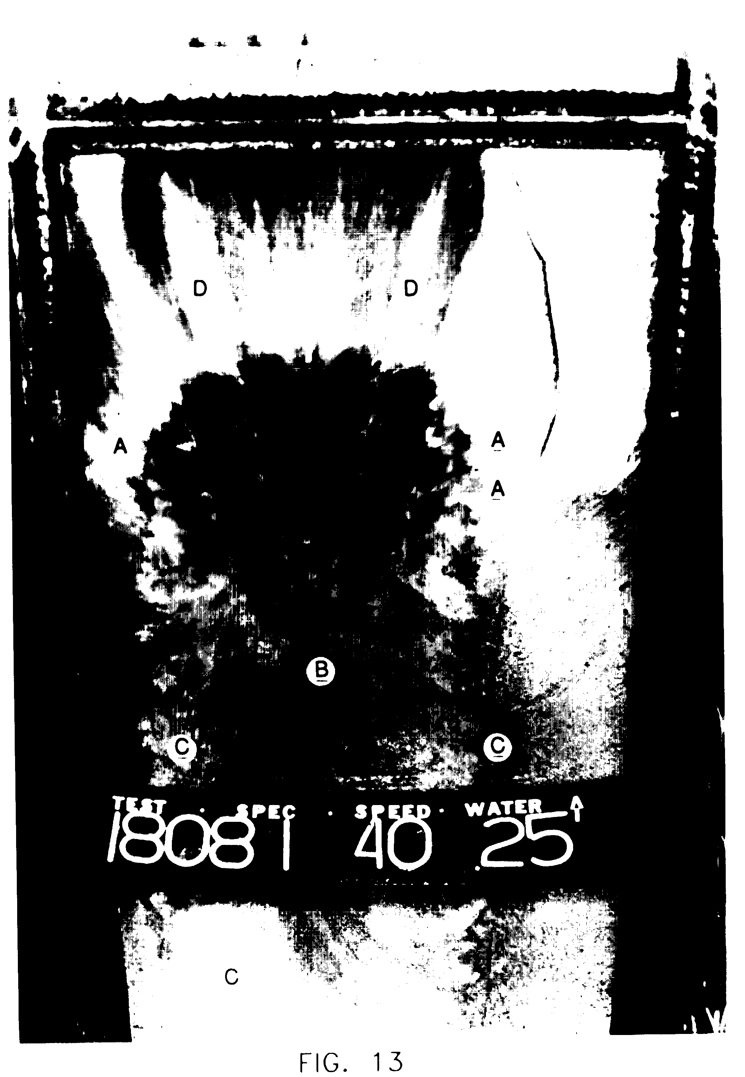

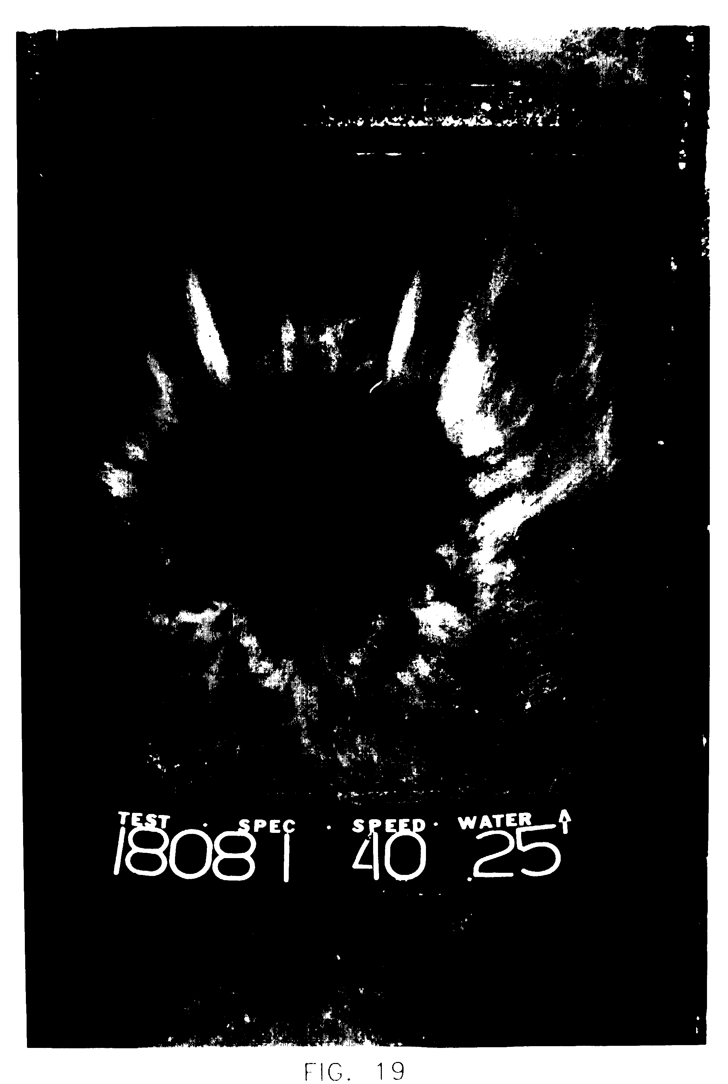

Referring now to Figures 13 and 19, which is a photograph, in black and white and color respectively, showing the tire tread of the present invention undergoing the hydroplaning trough test. As is evident from both photographs, each of the grooves throw a flume of water outward and toward the side of the tire, while the footprint remains free of any build-up of water. These grooves provide increased sidesplash capability. There is significantly less build-up of water in front of the tire of the present invention as compared to the build-up found in the prior art treads displayed in Figures 9 & 15, 11 & 17 and 12 & 18. Furthermore, there is significantly improved sidesplash from the slots, which is shown by rather distinct flumes of water being ejected from the slots on both sides of the tire. While the tire does display turbulence behind the contact area, the pattern of turbulence is somewhat different. Unlike the other tires, this design does not have a clear blue patch adjacent the side of the tire. Rather, there are regions of blue, indicative of a lack of water, scattered and intermixed with the turbulent regions in the area immediately behind the footprint and are observable in Figure 19. These regions are difficult to observe in Figure 13, but are depicted as areas C.

While each of the prior art tires maintains a contact area free of a build-up of film under the tire under the test conditions and are effective in avoiding hydroplaning, the tire design of the present invention prevents a build-up of film under the tire in a different manner by improving the sidesplash capabilities of the tire, thus avoiding a wall of water from building up immediately in front of the tire. Because the water is pushed away from the contact area in flumes and is directed more to the side of the tire than the prior art designs, the tire design of the present invention will continue to be effective as speeds increase since there will be less water immediately in front of the contact area to be displaced, even as the area over which the tire moves in a unit of time increases with increasing speed. Because more water is discharged to the side, there is no tendency or a very reduced tendency for water to build up in front of the tire such as is evident in Figures 9 & 15 and 12 & 18.

With respect to the ability of the tire of the present design to increase the sidesplash capability of the tire and prevent water build-up directly in front of the contact area, the angle α that the grooves make with the 360° design arc must be sufficiently large that the end of the groove opposite the design arc extends beyond the contact area for a predetermined tread width. This angle will vary depending upon the tread width, for as the tread width becomes wider, the angle α increases. However, the combination of tread width and inclination of angle α must be sufficient to allow the groove to exit the contact area. If the angle is too small, then the groove will not exit the contact area, which will cause water to build up in the contact area or be expelled immediately in front of the contact area, or if the groove does exit the contact area, the tire elements, also referred to as blocks, located at the edges become too small resulting in premature wear. This results in reduced sidesplash. For tires having a practical usable width, the minimum angle α is about 10°.

When the angle α is too large for a predetermined width, the tire elements located at the edge of the tire become too large, tending to be long and narrow, and no longer resemble blocks. For tires having a practical, usable width, the maximum angle is about 25°. In the contact area, the tire elements ideally resemble blocks, and have a trapezoidal shape. These trapezoidal shaped blocks in the contact area should have sides whose lengths have ratios of no greater than about 2:1. In a preferred embodiment, the tire of the present invention has an angle α of from 13.5° - 14.25°, and in a most preferred embodiment 14.0°. In a preferred embodiment, the trapezoidal shaped blocks in the contact area have sides whose lengths have a ratio of about 1.5:1. Of course, not all blocks in the contact area are trapezoidal-shaped. The blocks intersected by the design arc are generally triangular-shaped, although their required area is the same as the other blocks at least partially within the contact area. Blocks 60 in the first set of blocks intersected by shoulder arcs 26 preferably have an area of 0.4 - 2.5 square inches, while blocks 60 in the second set of blocks not intersected by shoulder arcs 26 but at least partially within the contact area have an area of from 1 - 2.5 square inches. Blocks which fall within these ranges provide a tire tread having optimum wear and stability.

Grooves 38 have a centerline 40 which extend from design arc 28 to the region between the contact arc 34 and shoulder arc 26. The sides 46 of the grooves extend adjacent to the groove centerline 40. However, as grooves 38 move from the design arc 28 at the groove first end 42 toward the groove second end 44 the amount of water moved along groove 38 gradually increases. To allow groove 38 to channel more water along its length, groove sides 46 may diverge from groove centerline by as much as 2° along its length from groove first end 42 to groove second end 44. In a preferred embodiment, groove sides 46 diverge 1° along its length from groove first end 42 to groove second end 44. While no divergence is necessary, that is, the groove sides 46 are parallel to the groove centerline 40, the amount of divergence should not exceed about 2° as the tread blocks 60 along the shoulder arc may become unacceptably small.

The sidesplash capability of the tire of the present invention is significantly increased by the slots 48 which greatly assist grooves 38 in preventing water build-up directly in front of the contact area. Furthermore, the angle β that the centerline 50 of slots make with 360° design arc 28 is greater than angle α the groove centerline 40 makes with design arc 28. It is evident that the angle β will vary depending on a preselected tread width. The angle β must be sufficiently large that the slot 48 will not become circumferential, but not so large that it is horizontal, that is 90°. This limitation is based on the finding that as the slot 48 approaches a horizontal configuration, undesirable turbulence is generated within the slot and at intersections of the slot 48 with the groove, generally at angles above about 80°. Turbulence is undesirable since it hinders the smooth flow of water out the sides and can lead to a build-up of a film of water, resulting in hydroplaning. For tires having a practical usable width, the angle β is from 45° to 80°. A preferred range for the angle β is 60° to 70°, and the most preferred angle β is 64.5°. Since the tread design principally relies on grooves 38 to channel water away from the footprint or contact area at the tire/road interface with a sideward directional component, slots 48 have a width which is less than the width of groove 38. Although slots 48 assist in moving water, it is believed that the wider and more steeply angled grooves 38 impart more momentum to the water because of this steeper angle with less possibility of turbulence and thus are more effective in throwing more water out of the path of the tire.

Like the grooves 38, slots 48 have a centerline 50 which extend from design arc 28 to the region between the contact arc 34 and shoulder arc 26. The slot sides 56 extend adjacent to the slot centerline 40. However, as slots 48 move from the design arc 28 at the slot first end 52 toward the slot second end 54 the amount of water moved along groove 48 gradually increases. To allow slot 48 to channel more water along its length, slot sides 56 may diverge from slot centerline 50 by as much as 4° along its length from slot first end 52 to slot second end 54. In a preferred embodiment, slot sides 54 diverge 1° along its length -from slot first end 52 to slot second end 54. While no divergence is necessary, that is, the slot sides 56 are parallel to the slot centerline 50, the amount of divergence should not exceed about 4° as the tread blocks 60 along the shoulder arc can be adversely affected by becoming too small.

In a preferred embodiment, in order to achieve proper tread block size throughout the tire tread, the continuous grooves 38 in the first tire surface section 30 and in the second tire surface section 32 has two distinct portions. A first groove portion 62 is primarily identical to groove 38. First groove portion 62 has a first centerline 64 and a first pair of sides 66 defining a first groove width. First centerline 64 has a first end 67 intersecting the 360° design arc 28 at the angle α and progressing in a straight line to a second end 68 in the slot 70 extending between contact arc 34 and shoulder arc 26. This slot 70 extends beyond shoulder arc 26, but does not extend to an edge of the outer tread portion adjacent the upper sidewall 20. The second groove portion 72 has a second pair of sides 74 defining a second groove width. The second groove width is less than the first groove width, preferably about one-half the width of first groove portion and the second groove portion 72 generally has a depth within the tread which is about half the depth of the first groove portion 62. Second groove portion has a centerline 76 which extends at the angle α from a first end 78 in slot 70 to a second end 80 in slot 82 which extends to the edge of the tread surface portion at the tire side. Preferably one of the sides 74 of second groove portion 72 is contiguous with first groove portion centerline 64; that is to say, an extension of first groove portion centerline 64 into second groove portion 72 is congruent with one of second groove portion sides. Additionally, the portion of slot 70 which extends from continuous groove 38, but which does not extend to the side of the outer tread surface portion adjacent the upper sidewall is about one-half the width and one-half the depth of the portion of this slot extending toward design arc 28.

When tires of the present design are used in tire/vehicle systems such as high speed racing cars, the rear tires may be up to 35% wider than the front tires. The rear tires will track the narrower front tires. The front tires provide improved steering and handling characteristics for the vehicle. While both the front and the rear tires are essentially identical to the tires described above, because of the differences in tread width, certain relationships between the elements of the tires are slightly different, as is expected due to the differing widths. Because of the different widths, the angles α and β between grooves and slots respectively and design arc 28 will be different in preferred embodiments of such tire vehicle systems. Associated with these differences are changes in tread block dimensions. Also, the number of blocks across the width of the outer tread surface portion of a tire which will be intersected by a reference arc 24 will vary, for tires having a practical usable width typically from 6 to 10 blocks being intersected by a reference arc, a tire having a wider tread width will have more tread blocks intersected by a given reference arc. If α₁ and β₁ each represent the angles made by the groove and slots with design arc 28 in the front tire, and α₂ and β₂ each represent the angles made by the groove and slots respectively with design arc 28 in the rear tire, then in a preferred embodiment, α₁ is an angle from 12° - 20° and α₂ is an angle from 10° - 25°, while β₁ is an angle from 55° - 70° and β₂ is an angle from 45° - 80°. Furthermore, while groove sides in the rear tires will diverge from groove centerline 40 by up to 1°, the groove sides in the front tires will diverge from groove centerline 40 by up to 0.5°. Because of these differences, as expected, the blocks in the rear tires can generally be larger than the blocks in the front tires. The first set of blocks in the rear tires, that is the blocks intersected by each of the second shoulder arcs of each rear tire, each have an area of from 0.6- 2.5 square inches, while the second set of blocks in the rear tires at least partially within the second contact area and not intersected by the second shoulder arcs, each have an area of from 1.2 - 2.3 square inches. These blocks are, on average, larger than the blocks on the front tires in which the first set of blocks each have an area of from 0.4- 2.0 square inches, while the second set of blocks in the front tires each have an area of from 1 - 2 square inches.

From the foregoing description and the operational discussion, when read in light of the several drawings, it is believed that those familiar with the art will readily recognize and appreciate the novel concepts and features of the present invention. Obviously, while the invention has been described in relation to only a limited number of embodiments, numerous variations, changes, substitutions and equivalents will present themselves to persons skilled in the art and may be made without necessarily departing from the scope and principles of this invention. As a result, the embodiments described herein are subject to various modifications, changes and the like without departing from the spirit and scope of the invention with the latter being determined solely by reference to the claims appended hereto.

## Claims

1. A pneumatic tire for use at high speeds on a paved road surface, the tire having an equatorial plane and an outer tread surface portion extending around an outer circumference of the tire, comprising:
a trad radius;
a pair of upper sidewalls on opposite sides of the tire, each upper sidewall having an upper sidewall contour radius;
a reference arc extending across the outer tread surface portion perpendicular to the equatorial plane between a pair of end points, the end points located by an intersection of the tread radius with the upper sidewall contour radii, the reference arc further defining a pair of shoulder arcs extending 360° around the outer circumference of the tire at the end points of the reference arc and perpendicular to the reference arc, the shoulder arcs being parallel to the equatorial plane of the tire;
a 360° design arc extending around the outer circumference of the tire dividing the tread surface portion into a first tread surface section and a second tread surface section, the 360° design arc located between the shoulder arcs and parallel to the equatorial plane of the tire;
a contact area at which the outer tread surface portion meets the paved road surface, the contact area having two edges, one in each tread surface section, which define a pair of contact arcs located 360° circumferentially on the outer tread surface portion parallel to the equatorial plane, the first contact arc lying between one of the shoulder arcs and the 360° design arc and the second contact arc lying between the remaining shoulder arc and the 360° design arc;
a directional tread pattern having no continuous circumferential grooves wherein the pattern includes
a plurality of short, interrupted grooves aligned along the 360° design arc extending around the outer circumference of the tire;
a plurality of continuous grooves in the first tread surface section and the second tread surface section, each groove having two sides defining a groove width, and a centerline with a first end intersecting the 360° design arc at a first angle α of from 10° to 25° and progressing in a straight line to a second end between the contact arc and the shoulder arc, the two sides extending from one of the interrupted grooves aligned along the 360° design arc to at least between the contact arc and the shoulder arc:
a plurality of continuous slots in the first tread surface section and the second tread surface section, each continuous slot having two sides defining a slot width smaller than the groove width of the continuous grooves, and a straight centerline intersecting the 360° design arc at a second angle β of from 45° to 80°, and the centerline extending in a straight line beyond the shoulder arc, the two sides of the slot intersecting at least the continuous groove nearest to the 360° design arc at a first end and extending beyond the shoulder arc at a second end; and
a plurality of blocks formed by the intersection of the grooves and the slots, a first set of blocks intersected by each of the shoulder arcs, each block in the first set having an area of from 0.4 - 2.5 square inches, and a second set of blocks at least partially within the contact area and not intersected by the shoulder arcs, each block in the second set being trapezoidally shaped and having a minimum area of 1 square inch, and wherein the length of any one side to any other side of the trapezoidally shaped blocks have a ratio of no greater than 2 to 1.

2. The tire of claim 1 wherein the angle α is sufficiently large that the groove extends from the first end which intersects the 360° design arc to the second end, which second end extends at least between the contact arc and shoulder arc for a predetermined tread width.

3. The tire of claim 1 wherein the angle α is from 13.5° to 14.5°.

4. The tire of claim 1 wherein the groove sides diverge from the first end of the groove centerline to the second end of the groove centerline by a maximum of 2°.

5. The tire of claim 1 wherein the angle β is from 45° to 80°.

6. The tire of claim 1 wherein the angle β is from 60° to 70°.

7. The tire of claim 1 wherein the slot sides diverge at a maximum angle of 4° from the slot centerline in a direction from the design arc at the first end to at least the shoulder arc at the second end.

8. The tire of claim 1 wherein the ratio of the length of any one side to any other side of the trapezoidal shaped blocks has a ratio of no greater than 1.5 to 1.

9. The tire of claim 1 wherein the blocks include minor notches at least partially within the contact area having an opening into the adjacent groove.

10. The tire of claim 1 wherein the continuous grooves in the first tread surface section and the second tread surface section have a first groove portion and a second groove portion, the first groove portion having a first pair of sides defining a first groove width, the first groove portion having a first centerline with a first end intersecting the 360° design arc at the angle α and progressing in a straight line to a second end, wherein the second end of the first centerline terminates in a portion of the slot extending between the contact arc and the shoulder arc and which slot extends beyond the shoulder arc but which does not extend to an edge of the outer tread portion adjacent the upper sidewall, the second groove portion having a second pair of sides defining a second groove width, the second groove width being less than the first groove width, and the second groove portion having a second centerline which second centerline extends at the angle α from a first end in the portion of the slot wherein the second end of the first centerline terminates and which slot extends beyond the soulder arc but which slot does not extend to the edge of the outer tread surface portion adjacent the upper sidewall at the tire sides, and which second centerline extends to a second end in a parallel slot which extends to the edge of the tread surface portion at the tire side.

11. The tire of claim 1 wherein the reference arc extending across the outer tread surface portion intersects 6 - 10 blocks.
